# EUROPÄISCHE PATENTSCHRIFT

(11) **EP 3 205 592 B1**
(45) Veröffentlichungstag und Bekanntmachung des Hinweises auf die Patenterteilung: **26.12.2018**
(21) Anmeldenummer: 17155309.2
(22) Anmeldetag: 08.02.2017
(51) Int. Cl.: B65D 6/00, B65D 6/18, B65D 6/34

(54) **MEHRWEGBEHÄLTER MIT VERSTÄRKTER WAND**
REUSABLE CONTAINER WITH REINFORCED WALL
RÉCIPIENT RÉUTILISABLE À PAROI RENFORCÉE

(30) Priorität: 09.02.2016 DE 202016100645 U
(43) Veröffentlichungstag der Anmeldung: 16.08.2017
(73) Patentinhaber: Wi-sales GmbH, 48607 Ochtrup (DE)
(72) Erfinder: Wischemann, Doris, 48607 Ochtrup (DE)
(74) Vertreter: Habbel, Ludwig

(56) Entgegenhaltungen:
- WO-A2-2004/043802
- CN-Y- 2 555 237
- DE-A1- 1 923 516
- GB-A- 1 378 507

## Beschreibung

Die Erfindung betrifft ein Mehrwegbehälter nach dem Oberbegriff des Anspruchs 1.

Ein gattungsgemäßer Behälter ist aus der DE 202014102216 U1 bekannt.

Das Wandelement des Mehrwegbehälters besteht üblicherweise aus Kunststoff, zu Gunsten eines geringen Gewichts und einer hohen Festigkeit beispielsweise in Form einer Sandwich- oder Wabenplatte.

Während derartige Mehrwegbehälter eine hohe Stabilität aufweisen, und beispielsweise, mit einem Deckel versehen, das Stapeln mehrerer gleichartiger Behälter aufeinander ermöglichen, ist die Stabilität der Wände gegen horizontale, von außen nach innen in den Behälter gerichtete Belastungen weniger stark ausgeprägt. Personal, welches Gegenstände aus dem Behälter entnimmt, lehnt sich teilweise von außen gegen die Behälterwand, um dann tief hinunter in das Behälterinnere greifen zu können und belastet dabei die Behälterwand in einer horizontalen Richtung, so dass die Behälterwand eingebeult wird. In ähnlicher Weise können Belastungen auf die Behälterwand einwirken, wenn Schüttgüter im Behälter aufgrund ihres Eigengewichts die Behälterwand auszubeulen bestrebt sind.

Aus der DE 19 23 516 A1 sowie aus der WO 2004/043802 A2 ist jeweils ein Mehrwegbehälter bekannt, dessen Wände aus mehreren übereinander gestapelten Ringsegmenten bestehen, so dass durch die Anzahl der verwendeten Segmente die Höhe des Behälters verändert werden kann. Um diese aufeinander gestapelten Segmente sicher zu verbinden, sind Profilleisten vorgesehen, welche die aneinander grenzenden, benachbarten Ränder der Segmente aufnehmen können und als Verbindungsprofile dienen, wenn die einzelnen Ringsegmente aufeinander gesteckt werden.

Aus der GB 1 378 507 A ist ein Behälter bekannt, bei dem liegend ausgerichtete Latten an den inneren Oberflächen der vier Wände zu deren Verstärkung vorgesehen sind.

Der Erfindung liegt die Aufgabe zugrunde, einen gattungsgemäßen Mehrwegbehälter dahingehend zu verbessern, dass dieser eine gegen Einbeulen oder Ausbeulen möglichst stabile Wand aufweist.

Diese Aufgabe wird durch einen Mehrwegbehälter nach Anspruch 1 gelöst. Vorteilhafte Ausgestaltungen sind in den Unteransprüchen beschrieben.

Die Erfindung schlägt mit anderen Worten vor, die Behälterwand mittels einer zusätzlichen Verstärkungsleiste auszusteifen. Dabei ist vorgesehen, dass nicht ein spezielles Wandelement von vornherein angefertigt zu werden braucht, sondern dass vielmehr eine bestehende Konstruktion eines Wandelements weiter genutzt werden kann und das Wandelement lediglich durch eine zusätzliche Maßnahme ertüchtigt werden kann. So wird beispielsweise auch ermöglicht, in der Praxis genutzte, im Umlauf befindliche Mehrwegbehälter nachzurüsten.

Die Erfindung sieht zu diesem Zweck vor, dass eine Wand einen liegenden, beispielsweise horizontal verlaufenden, Schlitz aufweist, der die Wand über ihre gesamte Wandstärke durchsetzt. Beiderseits des Schlitzes bildet die Wand zwei gegenüberliegende, so genannte Ufer aus, die an den Schlitz grenzen. In den Schlitz wird eine Verstärkungsleiste eingeschoben. Im einfachsten Fall kann diese Verstärkungsleiste lediglich als U-Profil ausgestaltet sein, also einen U-förmigen Querschnitt aufweisen; die Verstärkungsleiste kann jedoch auch weitere Abschnitte in ihrem Querschnittprofil aufweisen. In jedem Fall bildet der U-förmige Abschnitt der Verstärkungsleiste einen so genannten Umfassungsabschnitt dieser Verstärkungsleiste, der nämlich ein an den Schlitz grenzendes Ufer der Wand umfasst. Die U-förmige Querschnittsgeometrie der Verstärkungsleiste bzw. deren Umfassungsabschnitt bewirkt eine hohe Biegesteifigkeit der Verstärkungsleiste, so dass die mit dieser Verstärkungsleiste versehene Wand des Mehrwegbehälters eine hohe Quersteifigkeit aufweist und somit gegen Einbeulen oder Ausbeulen stabiler ist als eine ansonsten gleichartige Wand, die allerdings weder den Schlitz noch die Verstärkungsleiste aufweist.

Vorteilhaft kann die Verstärkungsleiste aus Metall bestehen, so dass eine besonders wirksame Verstärkung der Wand ermöglicht wird. Für das Recycling des Wandabschnitts ist dies insofern unproblematisch als die Verstärkungsleiste einfach in den Schlitz eingeschoben sein kann und dementsprechend einfach aus dem Wandabschnitt auch wieder entfernt werden kann.

Die Verstärkungsleiste kann vorteilhaft als Aluminiumstrangpressprofil ausgestaltet sein, so dass vorteilhafte, teilweise auch komplizierte Querschnittsgeometrien wirtschaftlich verwirklicht werden können und zudem die Verstärkungsleiste witterungsbeständig ist, auch ohne weitere Maßnahmen wie eine Lackierung oder dergleichen.

Vorteilhaft kann die Verstärkungsleiste über ihren U-förmigen Umfassungsabschnitt hinaus wenigstens einen weiteren Abschnitt aufweisen, der als ein dritter Schenkel der Querschnittsgeometrie ausgestaltet ist, so dass die Verstärkungsleiste einen insgesamt etwa h-förmigen Querschnitt aufweist. Der dritte Schenkel dieses h-förmigen Querschnitts wird als Stützabschnitt bezeichnet, da dieser nicht dem Ufer anliegt, welches von dem Umfassungsabschnitt der Verstärkungsleiste umfasst ist, sondern dem gegenüber liegenden Ufer der Wand anliegt, und zwar auf der Innenseite des Mehrwegbehälters, so dass auch dieses gegenüberliegende Ufer gegen Einbeulen oder Ausbeulen der Behälterwand verstärkt ist. Zudem kann dieser Stützabschnitt genutzt werden, um Beschlagelemente in die Verstärkungsleiste einzuhängen. Dies können beispielsweise Querriegel sein, die sich bis zur gegenüberliegenden Wand des Mehrwegbehälters erstrecken und die dort in eine dort ebenfalls vorgesehene Verstärkungsleiste eingehängt werden können, so dass mittels dieser Traversen beispielsweise die Möglichkeit besteht, Gegenstände im Inneren des Mehrwegbehälters an den Traversen aufzuhängen, beispielsweise Kleiderbügel. Die einzuhängenden Beschlagelemente können allerdings auch als vergleichsweise kurze Konsolen ausgestaltet sein, die sich nicht sehr weit in das Innere des Mehrwergbehälters erstrecken, die aber beispielsweise die Auflage eines Zwischenbodens ermöglichen, so dass das Innere des Mehrwegbehälters in mehrere Etagen unterteilt werden kann und unten gelagerte Gegenstände nicht durch das Gewicht von weiter oben im Mehrwegbehälter befindlichen Gegenständen belastet werden.

Vorteilhaft kann vorgesehen sein, beide Ufer der Wand von der Verstärkungsleiste umfassen zu lassen, so dass die Verstärkungsleiste vorteilhaft insgesamt vier Schenkel und einen insgesamt etwa H-förmigen Querschnitt aufweisen kann. Dementsprechend weist eine solche Verstärkungsleiste zwei gegenüberliegende Umfassungsabschnitte auf und die beiden Ufer werden präzise innerhalb der jeweiligen Umfassungsabschnitte geführt, so dass beispielsweise eine unerwünschte Spaltbildung vermieden werden kann, bei welcher sich ansonsten ein Wandabschnitt der Wand ggf. von der Verstärkungsleiste beabstanden könnte. Zudem weist die Verstärkungsleiste mit einem H-förmigen Profilquerschnitt eine nochmals verbesserte Biegesteifigkeit gegenüber einer lediglich U-förmig ausgestalteten Verstärkungsleiste auf.

Grundsätzlich kann es vorteilhaft sein, dass die Querschnittsgeometrie der Verstärkungsleiste symmetrisch ausgestaltet ist. Hierdurch wird die Montage der Verstärkungsleiste insofern vereinfacht, als die Verstärkungsleiste nicht in einer definierten Vorzugsausrichtung in die Wand des Mehrwegbehälters eingebracht werden muss und insofern eine fehlertolerante bzw. Fehler vermeidende Montage ermöglicht wird.

Es kann jedoch auch vorteilhaft sein, bewusst von einer symmetrischen Ausgestaltung der Querschnittgeometrie abzuweichen: Die Abschnitte der Verstärkungsleiste können im Behälterinneren eine andere Länge aufweisen als auf der Außenseite des Behälters, so dass die parallelen Abschnitte h-förmiger oder H-förmiger Verstärkungsleisten innen und außen nicht auf gleicher Höhe enden. Beispielsweise können die längeren Abschnitte etwa um die Hälfte länger sein als die kürzeren Abschnitte. Durch die ungleichen Längen kann einerseits die gewünschte Aussteifung der Behälterwand mittels der langen Abschnitt der Verstärkungsleiste sichergestellt werden, andererseits sowohl der Schiebewiderstand bei der Montage der Verstärkungsleiste als auch der Materialaufwand und somit das Gewicht und die Kosten der Verstärkungsleiste möglichst niedrig gehalten werden. Ob die innerhalb des Behälters vorgesehenen Abschnitte oder die außen am Behälter vorgesehenen Abschnitte länger ausgestaltet sind, kann sich danach richten, ob eine besonders hohe Schutzwirkung gegen Einbeulen der Behälterwand bei deren Belastung von außen gewünscht ist, oder aber gegen Ausbeulen bei einer aus dem Behälterinneren auf die Wand einwirkenden Druckbelastung.

Wie bereits erläutert, kann ein nach oben ragender Abschnitt der Verstärkungsleiste dazu genutzt werden, Beschlagelemente in die Verstärkungsleiste einzuhängen. Vorteilhaft kann dabei ein solcher nach oben ragender Abschnitt der Verstärkungsleiste als so genannter Halteabschnitt ausgestaltet sein, der nämlich eine zur Wand hin ragende Rippe aufweist. Durch diese Rippe wird es ermöglicht, dass das Beschlagelement nicht einfach von oben zwischen den entsprechenden Abschnitt der Verstärkungsleiste und der Wand eingesteckt wird, sondern dass ein solches Beschlagelement die Rippe des Halteabschnitts regelrecht formschlüssig hintergreifen kann und somit besonders zuverlässig an der Verstärkungsleiste gehalten ist.

Vorteilhaft kann das Beschlagelement einen Haken bilden, mit dem es in die Verstärkungsleiste eingehängt werden kann. Die Verstärkungsleiste muss daher im Behälterinneren nicht so breit ausgeführt werden und so weit in das Behälterinnere hineinragen, dass das Beschlagelement zuverlässig sicher allein dadurch gehalten werden kann, dass es auf der Verstärkungsleiste aufliegt. Das Einhängen mittels des Hakens stellt demgegenüber einen erheblich zuverlässigen Halt des Beschlagelements an der Verstärkungsleiste sicher.

Vorteilhaft kann die Verstärkungsleiste in der oberen Hälfte der Wand angeordnet sein. Mit ihrem unteren Ende ist das ringförmige Wandelement nämlich typischerweise am Boden festgelegt und somit gegen Einbeulen oder Ausbeulen gesichert, beispielsweise indem es in eine Nut des Bodens eingestellt wird. Ähnlich kann auch der obere Rand des Wandelements durch einen entsprechenden Deckel des Mehrwegbehälters fixiert werden. Wenn allerdings der Deckel abgenommen wird um den Zugang zum Behälterinneren zu ermöglichen, fehlt diese obere Fixierung, so dass die Verstärkungsleiste vorteilhaft im oberen Bereich der Wand deren Verstärkung bewirkt und daher vorteilhaft in der oberen Hälfte der Wand angeordnet ist.

Für die Montage der Verstärkungsleiste kann vorteilhaft ein Einführungsschlitz vorgesehen sein, der an einem Ende des liegend verlaufenden Schlitzes angeordnet ist und sich aufrecht erstreckt, also im Wesentlichen quer zum Schlitz verläuft. Dieser Einführungsschlitz ist im Wesentlichen so lang wie die Abschnitte der Verstärkungsleiste, die im Inneren des Mehrwegbehälters angeordnet werden sollen. Die Verstärkungsleiste kann also an den Einführungsschlitz angesetzt werden und mit ihren Abschnitten, die an der Innenseite der Wand vorgesehen sind, in den Einführungsschlitz geschoben werden und dabei gleichzeitig auch in den eingangs erwähnten, liegend verlaufenden Schlitz der Wand eingeschoben werden.

Vorteilhaft kann an den Schlitz angrenzend eine Einführungsöffnung vorgesehen sein, die das Einführen der Verstärkungsleiste in den Schlitz ermöglicht. Diese Einführungsöffnung kann beispielsweise als der bereits erwähnte Einführungsschlitz ausgestaltet sein, sie kann jedoch auch großflächiger bemessen sein und beispielsweise als runde, quadratische oder ähnlich ausgestaltete Öffnung ausgeführt sein. Ein Verschluss ist vorgesehen, mit dem die Einführungsöffnung verschlossen werden kann, so dass das Behälterinnere beispielsweise vor Spritzwasser o. dgl. geschützt werden kann.

Der Verschluss kann beispielsweise als Aufkleber ausgestaltet sein, vorteilhaft jedoch kann der Verschluss als Steckkappe ausgestaltet sein, welche in die Einführungsöffnung bzw. in den Schlitz eingesteckt werden kann. Somit wird ein zuverlässiger Verschluss der Einführungsöffnung auch dann gewährleistet, wenn die Behälterwand aus einem Material ausgestaltet ist, welches keine gute Haft-Grundlage für Klebeetiketten bietet.

Es kann vorgesehen sein, lediglich eine Wand des Wandelements mit einer Verstärkungsleiste zu ertüchtigen, beispielsweise wenn der Behälter stets in einer bestimmten Position angeordnet wird und nur von einer Wand her ein Zugriff in das Behälterinnere erfolgt. Es können jedoch auch zwei gegenüberliegende Wände oder sämtliche Wände des Mehrwegbehälters mit Verstärkungsleisten versehen werden.

Ausführungsbeispiele der Erfindung werden anhand der rein schematischen Darstellungen nachfolgend näher erläutert. Dabei zeigt
- Fig. 1: eine perspektivische Ansicht auf einen Mehrwegbehälter,
- Fig. 2 u. 3: Vertikalschnitte durch eine Behälterwand mit unterschiedlich ausgestalteten Verstärkungsleisten,
- Fig. 4: eine perspektivische Ansicht auf einen Ausschnitt einer Verstärkungsleiste und ein daran gehaltenes Beschlagelement, und
- Fig. 5: eine perspektivische Ansicht auf einen Ausschnitt des Eckbereichs eines Mehrwegbehälters.

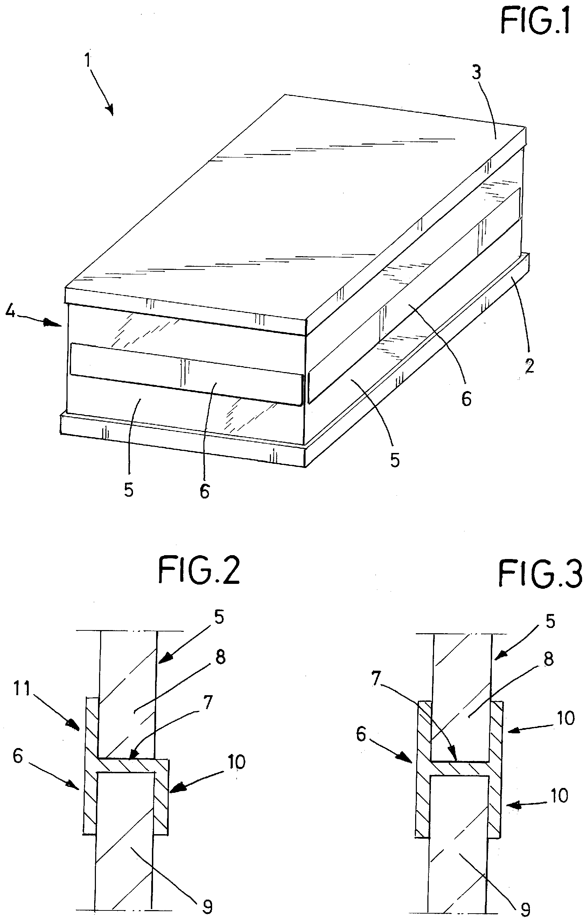

In den Zeichnungen ist mit 1 insgesamt ein Mehrwegbehälter bezeichnet, der einen Boden 2 aufweist, einen Deckel 3 sowie einen Wandabschnitt 4, der ringförmig ausgestaltet ist und zusammengefaltet werden kann, und der vier einzelne Wände 5 des Mehrwegbehälters 1 bildet. In Fig. 1 ist dargestellt, dass bei einem solchen Mehrwegbehälter 1 alle vier Wände 5 des Wandelements 4 jeweils mit einer Verstärkungsleiste 6 versehen sind.

Fig. 2 zeigt einen Vertikalschnitt durch eine Wand 5, wobei ein horizontal verlaufender Schlitz 7 die Wand 5 durchsetzt, so dass beiderseits des Schlitzes 7 zwei Wandabschnitte der Wand 5 gebildet werden, die jeweils ein an den Schlitz 7 grenzendes oberes Ufer 8 sowie unteres Ufer 9 bilden.

In Fig. 2 ist eine Verstärkungsleiste 6 dargestellt, die einen h-förmigen Querschnitt mit insgesamt drei Profilschenkeln aufweist. Dabei bildet diese Verstärkungsleiste 6 einen nach unten offenen, U-förmigen Umfassungsabschnitt 10, der das untere Ufer 9 der Wand 5 umfasst, und weiterhin, im Behälterinneren, einen nach oben ragenden Stützabschnitt 11, der den oberen Wandabschnitt der Wand 5 im Bereich des oberen Ufers 8 nach innen hin abstützt, und der es zudem ermöglicht, Beschlagelemente in die Verstärkungsleiste 6 einzuhängen, indem diese Beschlagelemente in den Spalt zwischen dem Stützabschnitt 11 und dem oberen Ufer 8 eingeschoben werden.

Fig. 3 zeigt ein zweites Ausführungsbeispiel einer Verstärkungsleiste 6, welches einen H-förmigen Querschnitt aufweist und somit zwei gegenüberliegende Umfassungsabschnitte 10 bildet, mit welchem sowohl das obere Ufer 8 als auch das untere Ufer 9 der Wand 5 beiderseits des Schlitzes 7 umfasst und sicher geführt sind.

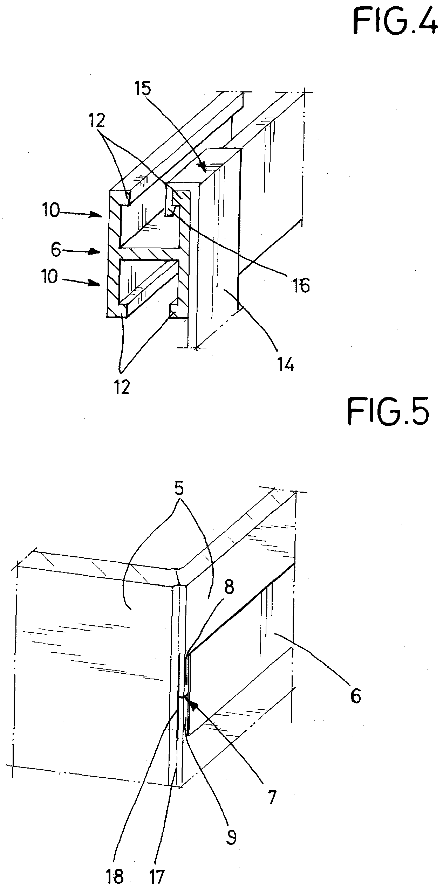

Fig. 4 zeigt ein drittes Ausführungsbeispiel, bei welchem die Verstärkungsleiste 6 ähnlich wie in Fig. 3 einen H-förmigen Querschnitt aufweist und zwei Umfassungsabschnitte 10 bildet. Die vier Schenkel dieser Verstärkungsleiste 6 sind jeweils mit einer nach innen, zur Wand 5 hin ragenden Rippe 12 versehen, so dass die vier Schenkel dieser Verstärkungsleiste 6 als Halteabschnitte bezeichnet werden, die speziell dazu ausgestaltet sind, einem Beschlagelement 14 einen zuverlässigen Halt zu bieten. Zu diesem Zweck weist das Beschlagelement 14 einen Haken 15 auf, der an seinem Ende mit einem Widerhaken 16 versehen ist. Mit dem Widerhaken 16 kann die Rippe 12 hintergriffen werden, so dass das Beschlagelement 14 nicht unbeabsichtigt von der Verstärkungsleiste 6 entfernt werden kann. Die Flexibilität der Wand 5 erlaubt es jedoch, den Haken 15 des Beschlagelementes 14 zwischen die Wand 5 und den Halteabschnitt der Verstärkungsleiste 6 zu führen und auch später das Beschlagelement 14 wieder von der Verstärkungsleiste 6 abzunehmen, indem dabei die Wand 5 so weit eingedrückt wird, dass der Widerhaken 16 an der Rippe 12 entlang nach oben geführt werden kann.

Die Proportionen in Fig. 4 sind rein illustrativ gewählt und müssen nicht den tatsächlichen Verhältnissen entsprechen, beispielsweise können die Rippen 12 weniger stark zur Wand hin vorspringen, also flacher als dargestellt ausgestaltet sein.

Fig. 5 zeigt eine Ecke eines Mehrwegbehälters 1, an welcher zwei Wände 5 des Wandelements 4 aneinander grenzen. In an sich bekannter Weise ist im Bereich dieser Ecke eine Naht 17 geschaffen, die das Falten des Wandelements 4 erleichtert. In die Naht 17 ist ein Einführungsschlitz 18 eingebracht worden, der quer zum Schlitz 7 verläuft. Bei dem dargestellten Ausführungsbeispiel erstreckt sich der Einführungsschlitz 18 sowohl nach oben als auch nach unten, vom Schlitz 7 aus gesehen, so dass beispielsweise eine Verstärkungsleiste 6 mit einem H-förmigen Profilquerschnitt in den Einführungsschlitz 18 und in den Schlitz 7 eingeschoben werden kann. Rein beispielhaft ist in Fig. 5 ersichtlich, dass nicht sämtliche Wände 5 mit Verstärkungsleisten 6 versehen sind, sondern die Verstärkung der Wände 5 auf eine oder mehrere, jedoch nicht sämtliche, Wände 5 des Wandelementes 4 beschränkt sein kann.

Abweichend von dem in Fig. 5 dargestellten Ausführungsbeispiel kann vorgesehen sein, eine Einführungsöffnung nicht in der unmittelbaren Ecke, beispielsweise in der Naht 17 vorzusehen, sondern vielmehr in der Fläche einer Wand 5. Diese Einführungsöffnung kann ebenfalls als Einführungsschlitz 18 ausgestaltet sein, es kann sich jedoch auch um eine großformatige Öffnung handeln. Weiterhin kann in Abwandlung des dargestellten Ausführungsbeispiels vorgesehen sein, die Einführungsöffnung mittels einer Steckkappe zu verschließen, welche in die Einführungsöffnung selbst und/oder in den Schlitz 7 eingesteckt werden kann.

Fig. 5 zeigt, dass die Verstärkungsleiste 6 sich nicht über die gesamte Länge der Wand 5 erstreckt, sondern dass noch ein gewisser Freiraum bis zur Ecke, nämlich bis zur Naht 17 verbleibt. Abweichend davon kann vorgesehen sein, dass die Verstärkungsleiste 6 bis zur Naht 17 verläuft, und insbesondere wenn auch die in Fig. 5 nicht verstärkte Wand 5 mit einem Schlitz 7 versehen wird, kann vorgesehen sein, durch denselben Einführungsschlitz 18 auch in diese andere Wand und in deren Schlitz 7 eine Verstärkungsleiste 6 einzubringen. Bei ausreichender Länge der Verstärkungsleisten 6, wenn diese nämlich sich jeweils bis in die Ecke hinein erstrecken, kann ein besonders stabiler Verbund der Verstärkungsleisten 6 bewirkt werden, indem diese unmittelbar aneinander grenzen und miteinander verbunden werden, z. B. durch Klammern, Schraubverbindungen o. dgl. oder indem die benachbarten Verstärkungsleisten 6 durch Zwischenstücke miteinander verbunden werden, insbesondere wie in Fig. 1 sämtliche Wände 5 mit Verstärkungsleisten 6 versehen sind, kann so ein geschlossener Rahmen durch die vier miteinander verbundenen Verstärkungsleisten 6 geschaffen werden, da der Mehrwegebehälter 1 eine zusätzliche Stabilität verleiht.

## Patentansprüche

1. Mehrwegbehälter (1),
mit einem Boden (2),
und einem ringförmigen, zusammenfaltbaren Wandelement (4), welches mehrere Wände (5) des Mehrwegbehälters (1) bildet,
**dadurch gekennzeichnet,**
**dass** eine der Wände (5) einen liegend verlaufenden, die Wand (5) durchsetzenden Schlitz (7) aufweist,
an welchen zwei gegenüberliegende Ufer (8, 9) dieser Wand (5) grenzen,
wobei eine Verstärkungsleiste (6) in den Schlitz (7) eingeschoben ist,
die einen Querschnitt mit einem U-förmigen Umfassungsabschnitt (10) aufweist und mit diesem Umfassungsabschnitt (10) ein an den Schlitz (7) grenzendes Ufer (8, 9) der Wand (5) umfasst.

2. Mehrwegbehälter nach Anspruch 1,
**dadurch gekennzeichnet,**
**dass** die Verstärkungsleiste (6) aus Metall besteht.

3. Mehrwegbehälter nach Anspruch 2,
**dadurch gekennzeichnet,**
**dass** die Verstärkungsleiste (6) als Aluminium-Strangpressprofil ausgestaltet ist.

4. Mehrwegbehälter nach einem der vorhergehenden Ansprüche,
**dadurch gekennzeichnet,**
**dass** die Verstärkungsleiste (6) einen h-förmigen Querschnitt aufweist,
der einerseits den Umfassungsabschnitt (10) bildet,
und der zudem einen Stützabschnitt (11) bildet, welcher dem gegenüberliegenden Ufer (8, 9) der Wand (5) auf der Innenseite des Mehrwegbehälters (1) anliegt.

5. Mehrwegbehälter nach einem der Ansprüche 1 bis 3,
**dadurch gekennzeichnet,**
**dass** die Verstärkungsleiste (6) einen H-förmigen Querschnitt aufweist,
der zwei gegenüberliegende Umfassungsabschnitte (10) bildet und die beiden gegenüberliegenden Ufer (8, 9) der Wand (5) umfasst.

6. Mehrwegbehälter nach einem der vorhergehenden Ansprüche,
**dadurch gekennzeichnet,**
**dass** die Verstärkungsleiste (6) einen nach oben ragenden Halteabschnitt aufweist,
der mit einer zur Wand (5) hin ragenden Rippe (12) versehen ist.

7. Mehrwegbehälter nach einem der vorhergehenden Ansprüche,
**gekennzeichnet durch**
ein Beschlagelement (14), welches einen Haken (15) bildet, mit dem es in die Verstärkungsleiste (6) einhängbar ist.

8. Mehrwegbehälter nach einem der vorhergehenden Ansprüche,
**dadurch gekennzeichnet,**
**dass** die Verstärkungsleiste (6) in der oberen Hälfte der Wand (5) angeordnet ist.

9. Mehrwegbehälter nach einem der vorhergehenden Ansprüche,
**dadurch gekennzeichnet,**
**dass** das Querschnittsprofil der Verstärkungsleiste (6) Abschnitte im Inneren und außerhalb des Mehrwegbehälters (1) aufweist, wobei ein innerer Abschnitt und ein äußerer Abschnitt unterschiedlich lang ausgestaltet sind.

10. Mehrwegbehälter nach einem der vorhergehenden Ansprüche,
**dadurch gekennzeichnet,**
**dass** an ein Ende des Schlitzes (7) ein Einführungsschlitz (18) angrenzt, welcher sich im Wesentlichen quer zu dem Schlitz (7) erstreckt und im Wesentlichen so lang ist wie die im Inneren des Mehrwegbehälters (1) angeordneten Abschnitte der Verstärkungsleiste (6).

11. Mehrwegbehälter nach einem der vorhergehenden Ansprüche,
**dadurch gekennzeichnet,**
**dass** an den Schlitz (7) angrenzend eine Einführungsöffnung angeordnet ist,
und **dass** ein Verschluss vor der Einführungsöffnung angeordnet ist.

12. Mehrwegbehälter nach Anspruch 11,
**dadurch gekennzeichnet,**
**dass** der Verschluss als in die Einführungsöffnung und / oder den Schlitz (7) einsteckbare Steckkappe ausgestaltet ist.

## Claims

1. Reusable container (1) having a base (2) and an annular, foldable wall element (4) that forms a number of walls (5) of the reusable container (1), **characterised in that** one of the walls (5) incorporates a horizontal slot (7) extending through the wall (5) and bounded by two opposing edges (8, 9) of this wall (5), where inserted into the slot (7) is a reinforcing rail (6) that has a cross section with a U-shaped enclosing section (10) and that encloses with this enclosing section (10) an edge (8, 9) of the wall (5) that bounds the slot (7).

2. Reusable container in accordance with claim 1, **characterised in that** the reinforcing rail (6) is made of metal.

3. Reusable container in accordance with claim 2, **characterised in that** the reinforcing rail (6) is constructed as an extrusion-moulded aluminium profile.

4. Reusable container in accordance with any one of the foregoing claims, **characterised in that** the reinforcing rail (6) incorporates an h-shaped cross-section that, on the one hand, forms the enclosing section (10) and, on the other, forms a bracing section (11) that fits against the opposing edge (8, 9) of the wall (5) on the inside of the reusable container (1).

5. Reusable container in accordance with any one of claims 1 to 3, **characterised in that** the reinforcing rail (6) incorporates an H-shaped cross-section that forms two opposing enclosing sections (10) and encloses the two opposing edges (8, 9) of the wall (5).

6. Reusable container in accordance with any one of the foregoing claims, **characterised in that** the reinforcing rail (6) incorporates a retaining section that projects upwards and is provided with a rib (12) that projects towards the wall (5).

7. Reusable container in accordance with any one of the foregoing claims, **characterised by** a fitting element (14) shaped in the form of a hook (15) by which it can be hung in the reinforcing rail (6).

8. Reusable container in accordance with any one of the foregoing claims, **characterised in that** the reinforcing rail (6) is arranged in the upper half of the wall (5).

9. Reusable container in accordance with any one of the foregoing claims, **characterised in that** the cross-sectional profile of the reinforcing rail (6) incorporates sections on the inside of and outside the reusable container (1), where an inner section and an outer section are constructed in different lengths.

10. Reusable container in accordance with any one of the foregoing claims, **characterised in that** adjoining one end of the slot (7) is an insertion slot (18) that extends essentially at right angles to the slot (7) and is essentially as long as the sections of the reinforcing rail (6) that are arranged on the inside of the reusable container (1).

11. Reusable container in accordance with any one of the foregoing claims, **characterised in that** an insertion opening is arranged so that it adjoins the slot (7) and a closing means is arranged in front of the insertion opening.

12. Reusable container in accordance with claim 11, **characterised in that** the closing means is constructed in the form of an insertable plug-cap that can be inserted into the insertion opening and/or the slot (7).

## Revendications

1. Récipient réutilisable (1) composé d'un fond (2) et d'un élément paroi (4) annulaire repliable formant plusieurs parois (5) du récipient réutilisable (1), **caractérisé en ce que** l'une des parois (5) présente une fente (7) au tracé horizontal traversant la paroi (5), fente que viennent jouxter deux bords (8, 9) se faisant face de cette paroi (5), sachant qu'un bandeau renfort (6) a été inséré dans la fente (7), bandeau qui présente une section composée d'un segment de ceinture (10) en forme de U et qui englobe avec ce segment de ceinture (10) un bord (8, 9) de la paroi (5) limitrophe de la fente (7).

2. Récipient réutilisable selon la revendication 1, **caractérisé en ce que** le bandeau renfort (6) est en métal.

3. Récipient réutilisable selon la revendication 2, **caractérisé en ce que** le bandeau renfort (6) est configuré en profilé d'aluminium extrudé.

4. Récipient réutilisable selon l'une des revendications précédentes, **caractérisé en ce que** le bandeau renfort (6) présente une section en h qui d'une part forme le segment de ceinture (10) et qui d'autre part forme un segment de soutien (11) qui applique contre le bord opposé (8, 9) de la paroi (5) sur le côté intérieur du récipient réutilisable (1).

5. Récipient réutilisable selon l'une des revendications 1 à 3, **caractérisé en ce que** le bandeau renfort (6) présente une section en H qui forme deux segments de ceinture (10) se faisant face et qui englobe les deux bords (8, 9) de la paroi (5) se faisant face.

6. Récipient réutilisable selon l'une des revendications précédentes, **caractérisé en ce que** le bandeau renfort (6) présente un segment de retenue saillant vers le haut, segment qui est muni d'une nervure (12) faisant saillie en direction de la paroi (5).

7. Récipient réutilisable selon l'une des revendications précédentes, **caractérisé par** un élément ferrure (14) formant un crochet (15) à l'aide duquel il est possible de l'accrocher dans le bandeau renfort (6).

8. Récipient réutilisable selon l'une des revendications précédentes, **caractérisé en ce que** le bandeau renfort (6) est disposé dans la moitié supérieure de la paroi (5).

9. Récipient réutilisable selon l'une des revendications précédentes, **caractérisé en ce que** le profilé en coupe transversale du bandeau renfort (6) présente des segments à l'intérieur et à l'extérieur du récipient réutilisable (1), sachant qu'un segment intérieur et un segment extérieur sont configurés de longueurs différentes.

10. Récipient réutilisable selon l'une des revendications précédentes, **caractérisé en ce qu**'à une extrémité de la fente (7) aboutit une fente d'introduction (18) qui s'étend pour l'essentiel transversalement à la fente (7) et qui pour l'essentiel est aussi longue que les segments du bandeau renfort (6) disposés à l'intérieur du récipient réutilisable (1).

11. Récipient réutilisable selon l'une des revendications précédentes, **caractérisé en ce qu**'un orifice d'introduction est disposé limitrophe de la fente (7) et qu'un moyen d'obturation est disposé devant l'orifice d'introduction.

12. Récipient réutilisable selon la revendication 11, **caractérisé en ce que** le moyen d'obturation est configuré comme un capuchon enfichable dans l'orifice d'introduction et/ou dans la fente (7).
